# EUROPEAN PATENT SPECIFICATION

(11) **EP 3 410 404 B1**
(45) Date of publication and mention of the grant of the patent: **23.08.2023**
(21) Application number: 18174957.3
(22) Date of filing: 29.05.2018
(51) Int. Cl.: G06T 17/05

(54) **METHOD AND SYSTEM FOR CREATING AND SIMULATING A REALISTIC 3D VIRTUAL WORLD**
VERFAHREN UND SYSTEM ZUR ERZEUGUNG UND SIMULATION EINER REALISTISCHEN VIRTUELLEN 3D-WELT
PROCÉDÉ ET SYSTÈME PERMETTANT DE CRÉER ET DE SIMULER UN MONDE VIRTUEL 3D RÉALISTE

(30) Priority: 29.05.2017 WO PCT/IL2017/050598; 27.07.2017 US 201762537562 P
(43) Date of publication of application: 05.12.2018
(73) Proprietor: Cognata Ltd., 7621316 Rehovot (IL)
(72) Inventor: ATSMON, Dan, Rehovot 7621316 (IL); TSAFRIR, Guy, Zikhron-Yaakov 3090508 (IL); ASA, Eran, Petach-Tikva 4931925 (IL)
(74) Representative: Jaeger, Michael David

(56) References cited:
- US-A1- 2016 314 224
- ARVIND JAYARAMAN ET AL: "Creating 3D Virtual Driving Environments for Simulation-Aided Development of Autonomous Driving and Active Safety", SAE TECHNICAL PAPER SERIES, vol. 1, 28 March 2017 (2017-03-28), XP055518353, US ISSN: 0148-7191, DOI: 10.4271/2017-01-0107
- SUKTHANKAR R ET AL: "SHIVA: Simulated Highways for Intelligent Vehicle Algorithms", INTELLIGENT VEHICLES '95 SYMPOSIUM., PROCEEDINGS OF THE DETROIT, MI, USA 25-26 SEPT. 1, NEW YORK, NY, USA,IEEE, US, 25 September 1995 (1995-09-25), pages 332-337, XP010194139, DOI: 10.1109/IVS.1995.528303 ISBN: 978-0-7803-2983-6

## Description

### BACKGROUND OF THE INVENTION

The present invention, in some embodiments thereof, relates to creating a simulated model of a geographical area, and, more specifically, but not exclusively, to creating a simulated model of a geographical area, optionally including transportation traffic to generate simulation sensory data for training an autonomous driving system.

The arena of autonomous vehicles, either ground vehicles, aerial vehicles and/or naval vehicles has witnessed an enormous evolution during recent times. Major resources are invested in the autonomous vehicles technologies and the field is therefore quickly moving forward towards the goal of deploying autonomous vehicles for a plurality of applications, for example, transportation, industrial, military uses and/or the like.

The autonomous vehicles involve a plurality of disciplines targeting a plurality of challenges rising in the development of the autonomous vehicles. However, in addition to the design and development of the autonomous vehicles, there is a need for multiple and diversified support eco-systems for training, evaluating and/or validating the autonomous driving systems controlling the autonomous vehicles.

Patent Publication US 2016/314224A1 (Wei JEROME H. et al), 27 October 2016 (2016-10-27) (herein: D1) describes simulation methods and systems for facilitating user inputs comprising spontaneous simulated events in a simulated virtual environment during simulated operation of an autonomous vehicle. D1 further describes generation of simulation sensor data based on model data and behavioral data associated with each of the simulated virtual environment and the spontaneous simulated events. The simulated sensor data corresponds to simulated sensor inputs provided to the autonomous vehicle control system via sensors of the autonomous vehicle. The simulation further includes receiving simulation feedback data from the autonomous vehicle corresponding to simulated interaction of the autonomous vehicle within the simulated virtual environment. The simulated interaction includes reactive behavior of the autonomous vehicle control system in response to the spontaneous simulated events.

Publication "Creating 3D Virtual Driving Environments for Simulation-Aided Development of Autonomous Driving and Active Safety" by Arvind JAYARAMAN et al, SAE TECHNICAL PAPER SERIES, vol. 1, 28 March 2017 (2017-03-28), XP055518353, ISSN: 0148-7191, DOI: 10.4271/2017-01-0107 (herein: D2) describes methods and systems for injecting simulation data. For example, D2 described injection of sensor simulation data generated by simulation tools and simulation algorithms into a virtual environment created for testing a simulated autonomous vehicle. The injection, as taught by D2, is facilitated by software plugins configured to enable the interaction of the simulation tools and algorithms with the simulation engine.

### SUMMARY

It is an object of the present invention to provide a system and a method for creating a virtual three dimensional (3D) realistic scene emulation of a geographical area, and, more specifically, but not exclusively, to creating a virtual three dimensional (3D) realistic scene emulation of a geographical area, optionally including transportation traffic, to generate data for a host vehicle simulation for training an autonomous driving system.

The foregoing and other objects are achieved by the features of the independent claims. Further implementation forms are apparent from the dependent claims, the description and the figures.

According to a first aspect of the invention, a computer implemented method of creating data for a host vehicle simulation for training an autonomous driving system comprises: in each of a plurality of iterations of a host vehicle simulation engine, using at least one processor for: obtaining from an environment simulation engine a semantic-data dataset representing a plurality of scene objects in a geographical area, each one of the plurality of scene objects comprises at least object location coordinates and a plurality of values of semantically described parameters; placing the plurality of scene objects in a virtual three dimensional (3D) visual realistic scene for emulating the geographical area according to the semantic-data dataset and based on synthetic 3D imaging data generated from a virtual realistic model created using visual imagery data of the geographical area; creating sensory ranging data simulation for the geographical area by applying to the virtual 3D visual realistic scene at least one noise pattern including at least one noise effect induced by the at least one identified scene object, the at least one noise pattern is associated with at least one sensor of a vehicle simulated in the virtual 3D visual realistic scene by the host vehicle simulation engine; converting the sensory ranging data simulation to an enhanced semantic-data dataset emulating the geographical area, the enhanced semantic-data dataset comprises a plurality of enhanced scene objects having object location coordinates adjusted when the at least one noise pattern has been applied and a plurality of values of respective semantically described parameters adapted when the at least one noise pattern has been applied; and providing the enhanced semantic-data dataset to the host vehicle simulation engine for updating a simulation of the vehicle in the virtual 3D visual realistic scene of the geographical area.

According to a second aspect of the invention, a system for creating data for a host vehicle simulation for training an autonomous driving system comprises: an input interface for obtaining from an environment simulation engine in each of a plurality of iterations a semantic-data dataset representing a plurality of scene objects in a geographical area, each one of the plurality of scene objects comprises at least object location coordinates and a plurality of values of semantically described parameters; at least one processor for: placing the plurality of scene objects in a virtual three dimensional (3D) visual realistic scene for emulating the geographical area according to the semantic-data dataset and based on synthetic 3D imaging data generated from a virtual realistic model created using visual imagery data of the geographical area; creating sensory ranging data simulation for the geographical area by applying to the virtual 3D visual realistic scene at least one noise pattern including at least one noise effect induced by the at least one identified scene object, the at least one noise pattern is associated with at least one sensor of a vehicle simulated in the virtual 3D visual realistic scene by a host vehicle simulation engine; converting the sensory ranging data simulation to an enhanced semantic-data dataset emulating the geographical area, the enhanced semantic-data dataset comprises a plurality of enhanced scene objects having object location coordinates adjusted when the at least one noise pattern has been applied and a plurality of values of respective semantically described parameters adapted when the at least one noise pattern has been applied; and an output interface for providing the enhanced semantic-data dataset to the host vehicle simulation engine for updating a simulation of the vehicle in the virtual 3D visual realistic scene of said geographical area.

With reference to the first and second aspects, in a first possible implementation of the first and second aspects of the present invention, the virtual 3D visual realistic scene being generated using a neural network. The neural network receives the semantic-data dataset and generates the virtual 3D visual realistic scene according to the semantic-data dataset. Optionally, the neural network is trained using a perceptual loss function. Using a perceptual loss function, as opposed to a pixel level loss function, may reduce unrealistic differences between an input virtual 3D scene and a generated realistic virtual 3D scene and increase realism of the generated realistic 3D virtual scene, and thus may facilitate improved accuracy of an autonomous driving system using the generated realistic virtual 3D scene, according to one or more accuracy metrics. Optionally, the neural network is a generator network of a Generative Adversarial Neural Network (GAN) or of a Conditional Generative Adversarial Neural Network (cGAN). Optionally, the neural network is trained using optical flow estimation to reduce temporal inconsistency between consecutive frames of a created virtual 3D visual realistic scene.

With reference to the first and second aspects, in a second possible implementation of the first and second aspects of the present invention, the at least one sensor of the vehicle simulated by the host vehicle simulation engine is selected from a group of sensors consisting of: a camera, a video camera, an infrared camera, a night vision sensor, a Light Detection and Ranging (LIDAR) sensor, a radar, and an ultra-sonic sensor.

With reference to the first and second aspects, in a third possible implementation of the first and second aspects of the present invention, the output interface is at least one digital communication network interface and providing the enhanced semantic-data dataset to the host vehicle simulation engine comprises sending a stream of data to at least one other processor via the least one digital communication network interface connected to the at least one processor. Using a digital communication network interface allows generating the realistic 3D virtual scene at a location remote to a location where the host vehicle simulator is executed.

With reference to the first and second aspects, in a fourth possible implementation of the first and second aspects of the present invention, the system further comprises a digital memory for at least one of storing code and storing an enhanced semantic-data dataset. Optionally the digital memory is shared access by the host vehicle simulation engine. Providing the enhanced semantic-data dataset to the host vehicle simulation engine comprises storing a file on the shared access memory accessible by the host vehicle simulation engine. Using shared access memory may facilitate reducing latency in providing the enhanced semantic-data dataset, for example compared to using interprocess communications or a digital network, and thus improve performance of the host vehicle simulation engine, for example by increasing an amount of simulation iterations per an amount of time.

With reference to the first and second aspects, in a fifth possible implementation of the first and second aspects of the present invention, the system further comprises a digital data storage connected to the at least one processor via the output interface. Optionally, the digital data storage is selected from a group consisting of: a storage area network, a network attached storage, a hard disk drive, an optical disk, and a solid state storage. Providing the enhanced semantic-data dataset to the host vehicle simulation engine comprises storing a file on a digital data storage. Using a digital storage may facilitate asynchronous communication between the system and the host vehicle simulation engine.

With reference to the first and second aspects, in a sixth possible implementation of the first and second aspects of the present invention, the system further comprises using the at least one processor for generating report data comprising at least one of analysis report data and analytics report data; and outputting the report data.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic illustration of a system for enhancing a semantic-data dataset which is received from an environment simulation engine 201 for a host vehicle simulation engine and providing the semantic-data dataset to the host vehicle simulation engine, according to some embodiments of the present invention, for instance by implementing the method depicted in FIG. 2 and optionally described above;
FIG. 2 is a flowchart of an exemplary process of creating a stream of data for a host vehicle simulation engine, according to some embodiments of the present invention;
FIG. 3 depicts an exemplary flow of operations for generating a sensory ranging data simulation, according to some embodiments of the present invention;
FIGs. 4 and 5 graphically depict the creating of target lists that semantically represent parameters of objects of a scene in a geographical area, according to some embodiments of the present invention;
FIG. 6 is an exemplary flow of data, according to some embodiments of the present invention;
FIG. 7 graphically depicts how enhanced semantic data, that contains target lists as created according to FIGs. 4 and 5, is created by the system (right side of the line) and how this enhanced semantic data is forwarded to update sensor state and readings, according to some embodiments of the present invention; and
FIG. 8 graphically depicts how the system (right side of the line) updates a simulation executed externally, for example by a host vehicle simulation engine, according to some embodiments of the present invention.

### DETAILED DESCRIPTION

The present invention, in some embodiments thereof, relates to generating a stream of semantic data for an autonomous simulator, and, more specifically, but not exclusively, to enhancing semantic data representing objects in a geographical area by using simulation of ranging sensor noise patterns, according to some embodiments of the present invention.

Ranging sensors include sensors that require no physical contact with an object being detected. They allow identification of an object without actually having to come into contact with the obstacle. For example, in robotics, a ranging sensor allows a robot to identify an obstacle without having to come into contact with the obstacle. Some examples of ranging sensors are sonic scanning sensors (also known as SONAR), using sound waves, and light based sensors, using projected light waves. An example of a light based sensor is a Light Detection and Ranging (LIDAR) sensor, using a laser light that is swept across the Lidar sensor's field of view and analyzing reflection of the laser light.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device.

The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing.

A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network.

The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s).

In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Various autonomous driving simulators have been developed during the last years. Such a simulator, which is also referred to as a host vehicle simulation engine, models or executes an autonomous driving system for example vehicle dynamics and low-level tracking controllers. Many simulators used an overly simplified vehicle model.

Lower-level vehicle controllers (e.g., path tracking and speed regulation) are external to a motion planner. In use, as the host vehicle moves, segments of a model mapping proximity to the vehicle are loaded from an environment simulation engine that models different invariant of a geographic area (e.g., road network, curb, etc.) usually including varying world elements (e.g., general static or moving objects).

The environment simulation engine provides ground-truth data. For instance, the environment simulation engine may include a road network that provides interconnectivity of roads and roads' lane-level information that specifies the drivable regions. The environment simulation engine makes use of road segments, where each segment may contain one or more parallel lanes.

Each lane may be specified by a series of global way-points. Connectivity among lanes is defined by pairs of exit/entry way-points. Alternatively for each waypoint, lane width (w) and speed limit (vlim) are added to global position (x and y). Station coordinate(s) may be calculated for each waypoint by calculating piecewise-linear cumulative distance along-road. Permanent obstacles may be represented in the environment simulation engine as stationary environment constraints that make certain regions non-traversable, such as curb and lane fences.

Unlike general objects described below, permanent obstacles typically do not have a separable shape. In use, as a host vehicle is simulated as moving, segments of model mapping proximity to the vehicle are loaded from the environment simulation engine to the host vehicle simulation engine. Furthermore, the environment simulation engine may simulate general objects such as dynamic objects. Various static and moving objects are modeled in the urban environment, for example objects of different types with different motion dynamics.

The trivial nonmovement model is for static objects (e.g., trash bins), which only contains unchanging pose information; a particle movement model may be used for objects whose motion can be omnidirectional (e.g., pedestrians). A kinematic bicycle model may be used to model objects with non-holonomic kinematic constraints (e.g., bicyclists and other passenger vehicles), hence there is a need for a separate perception simulation module to mimic realistic perception outcomes.

In order to facilitate fast and efficient computation of the driving simulation, the different invariant of the geographic area including the varying world elements are encoded by the environment simulation engine as a semantic-data dataset. For example, in each simulation iteration, a plurality of scene objects are forwarded by the environment simulation engine to be loaded to the host vehicle simulation engine. As used herein, a simulation iteration is an event such as loading or storing data representing a change in a scene which surrounds a host vehicle simulated by the host vehicle simulation engine. The loading may be done upon demand and/or iteratively every time frame and/or based on simulated velocity change of the vehicle simulated by the host vehicle simulation engine.

The present invention, according to some embodiments thereof, allows enhancing a semantic-data dataset outputted by the environment simulation engine, for instance by adapting the semantic-data dataset to emulate the geographic area as captured by actual sensors, for example ranging sensors, of the simulated vehicle. The sensor(s) include a LIDAR sensor, radar, an ultra-sonic sensor, a camera, an infrared camera and/or the like. In use, a semantic-data dataset received from an environment simulation engine is received and processed to be enhanced, for instance using one or more servers with one or more processors and/or designated processing hardware. The enhancement is optionally done as described below, for instance using one or more virtual realistic models.

In each iteration, a semantic-data dataset is received from the simulation engine and enhanced to provide an enhanced semantic-data dataset to the host vehicle simulation engine, for instance as a stream of data and/or a file stored in a shared access memory. Using the enhanced semantic-data dataset in the host vehicle simulation engine may improve performance of a host vehicle simulation engine, for example by reducing time required to train an autonomous driving system executed by the host vehicle simulation engine and/or by improving the autonomous driving system's accuracy according to one or more accuracy metrics, for example amount of collisions with one or more obstacles, compared to training the autonomous driving system using the semantic-data dataset as received from the environment simulation engine.

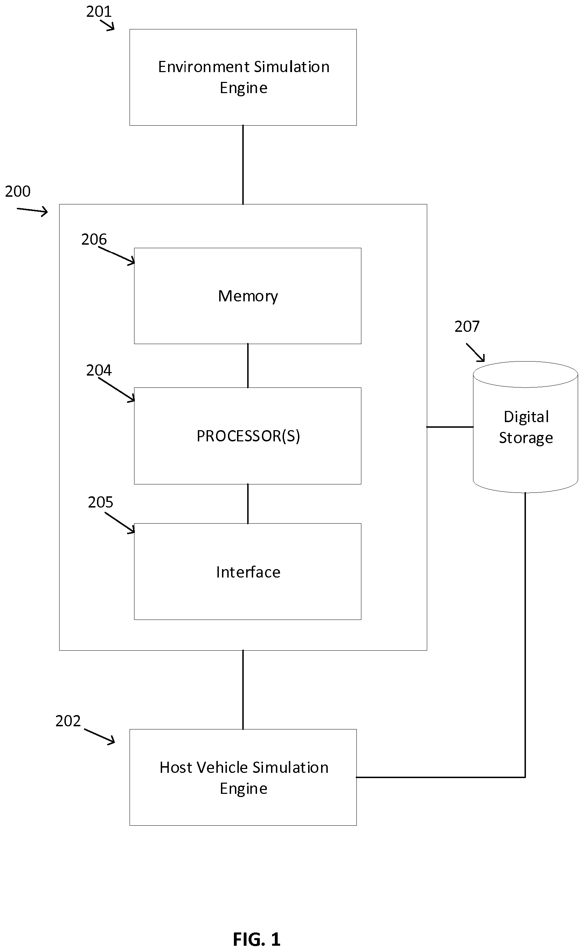

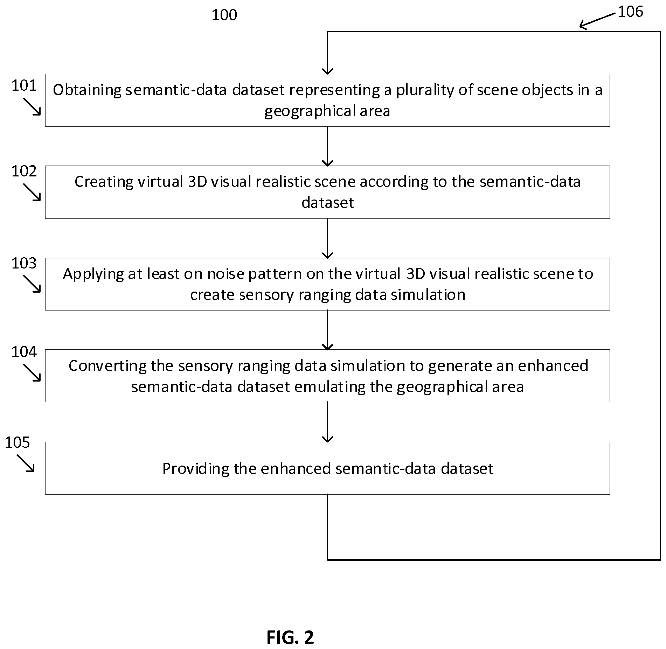

Referring now also to the drawings. FIG. 1 is a schematic illustration of a system 200 for enhancing semantic-data dataset which is received from an environment simulation engine 201 for a host vehicle simulation engine 202, and providing the semantic-data dataset to the host vehicle simulation engine 202, according to some embodiments of the present invention, for instance by implementing the method depicted in FIG. 2 and optionally described above. Optionally, system 200 comprises at least one processor 204 used for enhancing the semantic-data dataset. Optionally, the at least one processor 204 is connected to at least one interface 205 for the purpose of receiving the semantic-data dataset from the environment simulation engine 201, and additionally or alternately for providing the enhanced semantic-data data set to the host vehicle simulation engine 202. Optionally, at least one interface 205 is a digital communication network interface. Optionally, the at least one digital communication network interface 205 is connected to a Local Area Network (LAN), for example an Ethernet LAN or a wireless LAN. Optionally, the at least one digital communication network interface 205 is connected to a Wide Area Network (WAN), for example the Internet.

Optionally, system 200 comprises at least one digital data storage 207, for the purpose of providing the enhanced semantic-data dataset to the host vehicle simulation engine 202, such that at least one digital data storage 207 is accessible by the host vehicle simulation engine 202. Optionally the at least one digital storage 207 is electrically connected to at least one processor 204, for example when at least one digital storage 207 a hard disk drive or a solid state storage. Optionally, the at least one digital storage 207 is connected to at least one processor 204 via at least one digital communication network interface 205, for example when at least one digital storage 207 is a storage area network or a network attached storage.

Optionally the least one interface 205 is a digital memory interface, electrically connecting at least one processor 204 to at least one digital memory 206. Optionally, at least one digital memory 206 stores simulation enhancing code executed by at least one processor 204. Additionally or alternately, at least one digital memory is additionally accessed by the host vehicle simulation engine 202 and at least one processor 204 stores the enhanced semantic-data dataset on at least one digital memory 206 for the purpose of providing to the host vehicle simulation engine 202.

Reference is now made also to FIG. 1. FIG. 1 is a flowchart of an exemplary process 100 of creating a stream of data for a host vehicle simulation engine, according to some embodiments of the present invention. As shown at 106, the process is optionally iterative so that 101-105 are repeated in each of a plurality of simulation iterations for providing real time information to a host vehicle simulation engine, for instance as described above.

The process 100 may be implemented using a system adapted to enhance semantic data for training an autonomous driving system controlling a vehicle, for example, a ground vehicle, an aerial vehicle and/or a naval vehicle in a certain geographical area using a simulated virtual realistic model replicating the certain geographical area, for example system 200 above.

When implemented by the system 200, 101-105 are optionally performed iteratively by one or more processors 204 of the system 200 that executes a simulation enhancing code stored in a memory 206. First, as shown at 101, semantic data dataset representing a plurality of scene objects in a geographical area is obtained via at least one interface 205, for instance from a code executed with the environment simulation engine 201. The data may be received in a message and/or accessed when stored in a memory.

The scene objects are different invariants of a geographic area, optionally including varying world elements, for instance as described above. The geographical area is optionally the segments of occupancy grids maps in proximity to the vehicle, for instance segments that model different invariants of a geographic area including varying world elements.

The semantic data dataset may include object location coordinates and one or more of a plurality of values of semantically described parameters for each of the scene objects. The object location coordinates may be extracted from geographic map data obtained for the geographical area, for example, a 2D map, a 3D map, an orthophoto map, an elevation map, a detailed map comprising object description for objects present in the geographical area and/or the like. The geographic map data may be obtained from, for example, Google maps, OpenStreetMap and/or the like. The values may be indicative of parameters such as, for example, color, size, shape, text on signboards, states of traffic lights, velocity, movement parameters, behavior parameters and/or the like.

Now, as shown at 102, a virtual 3D visual realistic scene emulating the geographical area is generated (created) according to the received semantic-data dataset. The generation is performed by placing the objects in a virtual three dimensional (3D) visual realistic scene emulating the geographical area, for instance the different invariant of the geographic area, optionally including varying world elements such as vehicles and pedestrians.

The virtual 3D visual realistic scene may be based on segments of data of a synthetic 3D imaging data generated from a virtual realistic model created by obtaining visual imagery data of the geographical area, for example, one or more two dimensional (2D) and/or 3D images, panoramic image and/or the like captured at ground level, from the air and/or from a satellite. The visual imagery data may be obtained from, for example, Google Earth, Google Street View, OpenStreetCam, Bing maps and/or the like.

Optionally, one or more trained classifiers (classification functions) may be applied to the visual imagery data to identify different invariant of the geographic area, optionally including the varying world elements. The invariant of the geographic area and the varying world elements may be referred to herein as objects, such as static objects, for example, a road, a road infrastructure object, an intersection, a sidewalk, a building, a monument, a natural object, a terrain surface and/or the like and dynamic objects as vehicles and/or pedestrians. The classifier(s) may classify the identified static objects to class labels based on a training sample set adjusted for classifying objects of the same type as the target objects.

The identified labeled objects may be superimposed over the geographic map data obtained for the geographical, for example, a 2D map, a 3D map, an orthophoto map, an elevation map, a detailed map comprising object description for objects present in the geographical area and/or the like. The geographic map data may be obtained from, for example, Google maps, OpenStreetMap and/or the like.

A Generative Adversarial Neural Network (GAN) is a network having two neural networks, known as a generator (or refiner) and a discriminator, where the two neural networks are trained at the same time and compete again each other in a minimax game. A Conditional Generative Adversarial Neural Network (cGAN) is a GAN that uses extra conditional information Y that describes some aspect of the cGAN's data, for example attributes of the required generated object. Optionally, a GAN or cGAN's generator comprises a plurality of convolutional neural network layers, without fully connected and pooling neural network layers.

The labeled objects are overlaid over the geographic map(s) in the respective location, position, orientation, proportion and/or the like identified by analyzing the geographic map data and/or the visual imagery data to create a labeled model of the geographical area. Using one or more techniques, for example, a cGAN, stitching texture(s) (of the labeled objects) retrieved from the original visual imagery data, overlaying textured images selected from a repository (storage) according to the class label and/or the like the labeled objects in the labeled model may be synthesized with (visual) image pixel data to create the simulated virtual realistic model replicating the geographical area. Optionally, the one or more techniques comprise using one or more neural networks. Optionally, the one or more neural networks are a GAN or a cGAN. Optionally, the neural network one or more neural networks are the generator network of a GAN or a cGAN.

Moreover, the original visual imagery data may be used to extract the texture of one or more of the labeled objects. For example, assuming a road object is identified in the visual imagery data of the geographical area the road object is labeled in the labeled scene. The texture of the road may be extracted from the original visual imagery data and overlaid on the road object label in the labeled scene. In another exemplary implementation, the texture of one or more of the labeled objects may be retrieved from a repository comprising a plurality of texture images of a plurality of objects. The repository may be facilitated through one or more storage locations, for example, the memory 206 and/or one or more remote storage locations accessible over one or more networks. For example, assuming the road object is identified in the visual imagery data of the geographical area and labeled in the labeled scene, the texture of the road may be retrieved from a remote storage and overlaid on the road object label in the labeled scene.

Temporal consistency refers to consistency with regards to one or more image attributes in a sequence of images. Examples of temporal inconsistency are flickering of an object between two consecutive frames, and a difference in color temperature or lighting level between two consecutive frames exceeding an identified threshold difference. Optical flow estimation refers to estimating a pattern of apparent motion of objects, surfaces, and edges in a visual scene caused by the relative motion between an observer and a scene. Optionally, the one or more neural networks are trained using optical flow estimation, to reduce temporal inconsistency between consecutive frames of a created virtual 3D visual realistic scene (model). Optionally, the one or more neural networks are trained using a perceptual loss function, based on one or more objects identified in images of the virtual model, as opposed to a pixel-wise difference between images of the virtual model. Optionally, the one or more objects are identified in the images using a convolutional neural network feature extractor.

Optionally, the virtual realistic model is adjusted according to one or more lighting and/or environmental (e.g. weather, timing etc.) conditions to emulate various real world environmental conditions and/or scenarios, in particular, environmental conditions typical to the certain geographical area.

The synthetic 3D imaging data may be generated to depict the virtual realistic model from a point of view of one or more emulated sensors mounted on an emulated vehicle moving in the virtual realistic model. The emulated vehicle may be created in the virtual realistic model to represent a real world vehicle controlled by the autonomous driving system. The emulated sensor(s) may be a camera, a video camera, an infrared camera, a night vision sensor and/or the like which are mounted on a real world vehicle controlled by the autonomous driving system.

Moreover, the emulated imaging sensor(s) may be created, mounted and/or positioned on the emulated vehicle according to one or more mounting attributes of the imaging sensor(s) mounting on the real world vehicle, for example, positioning (e.g. location, orientation, elevations, etc.), field of view (FOV), range, overlap region with adjacent sensor(s) and/or the like. In some embodiments, one or more of the mounting attributes may be adjusted for the emulated imaging sensor(s) to improve perception and/or capture performance of the imaging sensor(s).

Based on analysis of the capture performance for alternate mounting options, one or more recommendation may be offered to the autonomous driving system for adjusting the mounting attribute(s) of the imaging sensor(s) mounting on the real world vehicle. The alternate mounting options may further suggest evaluating the capture performance of the imaging sensor(s) using another imaging sensor(s) model having different imaging attributes, i.e. resolution, FOV, magnification and/or the like.

Optionally, the received semantic data includes information about moving objects or kinematics thereof. In such embodiments one or more dynamic objects may be injected into the virtual realistic model, for example, a ground vehicle, an aerial vehicle, a naval vehicle, a pedestrian, an animal, vegetation and/or the like. The dynamic object(s) may further include dynamically changing road infrastructure objects, for example, a light changing traffic light, an opened/closed railroad gate and/or the like. Movement of one or more of the dynamic objects may be controlled according to movement patterns predefined and/or learned for the certain geographical area.

In particular, movement of one or more ground vehicles inserted into the virtual realistic model may be controlled according to driver behavior data received from a driver behavior simulator. The driver behavior data may be adjusted according to one or more driver behavior patterns and/or driver behavior classes exhibited by a plurality of drivers in the certain geographical area, i.e. driver behavior patterns and/or driver behavior classes that may be typical to the certain geographical area.

The driver behavior classes may be identified through big-data analysis and/or analytics over a large data set of sensory data, for example, sensory motion data, sensory ranging data and/or the like collected from a plurality of drivers moving in the geographical area.

The sensory data may include, for example, speed, acceleration, direction, orientation, elevation, space keeping, position in lane and/or the like. One or more machine learning algorithms, for example, a neural network (e.g. DNN, GMM, etc.), an SVM and/or the like may be used to analyze the collected sensory data to detect movement patterns which may be indicative of one or more driver behavior patterns. The driver behavior pattern(s) may be typical to the geographical area and therefore, based on the detected driver behavior pattern(s), the drivers in the geographical area may be classified to one or more driver behavior classes representing driver prototypes. The driver behavior data may be further adjusted according to a density function calculated for the geographical area which represents the distribution of the driver prototypes in the simulated geographical area.

Optionally, additional data relating to the emulated vehicle is simulated and injected to the autonomous driving system. The simulated additional data may include, for example, sensory motion data presenting motion information of emulated vehicle, transport data simulating communication of the emulated vehicle with one or more other entities over one or more communication links, for example, Vehicle to Anything (V2X) and/or the like.

Now, as shown at 103, one or more noise patterns associated with sensors of the vehicle simulated by the host vehicle simulation engine are applied to the virtual 3D visual realistic scene to create a sensory ranging data simulation of the geographical area. Some examples of sensors are a camera, a video camera, an infrared camera, a night vision sensor, a LIDAR sensor, a radar and an ultra-sonic sensor.

The noise patterns may include noise effects induced by one or more of the objects detected in the specific geographical area or in a general geographical area. The noise pattern(s) may describe one or more noise characteristics, for example, noise, distortion, latency, calibration offset and/or the like. The noise patterns(s) may be identified through big-data analysis and/or analytics over a large data set comprising a plurality of real world range sensor(s) readings collected for the geographical area and/or for other geographical locations. The big-data analysis may be done using one or more machine learning algorithms, for example, a neural network such as, for instance, a Deep learning Neural Network (DNN), a Gaussian Mixture Model (GMM), etc., a Support Vector Machine (SVM) and/or the like.

Optionally, in order to more accurately simulate the geographical area, the noise pattern(s) may be adjusted according to one or more object attributes of the objects detected in the geographical area, for example, an external surface texture, an external surface composition, an external surface material and/or the like. The characteristics of the objects detected in the scene and in particular the exterior characteristics of the objects may affect the sensory ranging data and therefore analyzing the collected sensory ranging data with respect to the object(s) characteristic(s) may further increase accuracy of the identified noise pattern(s). For example, some surface textures, surface compositions and/or surface materials may reflect differently rays projected by one or more of the range sensors and may therefore affect the accuracy of the acquired sensory ranging data. As stated herein before, one or more of the noise patterns corresponding to the scene object(s) detected in the virtual 3D visual realistic scene, specifically to the object attributes of the scene object(s) may be identified through the big-data analysis and/or analytics over a large data set comprising a plurality of real world range sensor(s) readings collected for the geographical area and/or for other geographical locations.

The noise pattern(s) may also be adjusted according to one or more environmental characteristics, for example, weather, timing (e.g. time of day, date) and/or the like. In some embodiments, one or more mounting attributes may be adjusted for the emulated range sensor(s) to improve accuracy performance of the range sensor(s).

The sensory ranging data simulation is created to emulate one or more sensory data feeds, for example, imaging data, ranging data, motion data, transport data and/or the like which may be injected to the host vehicle simulation engine during a training session.

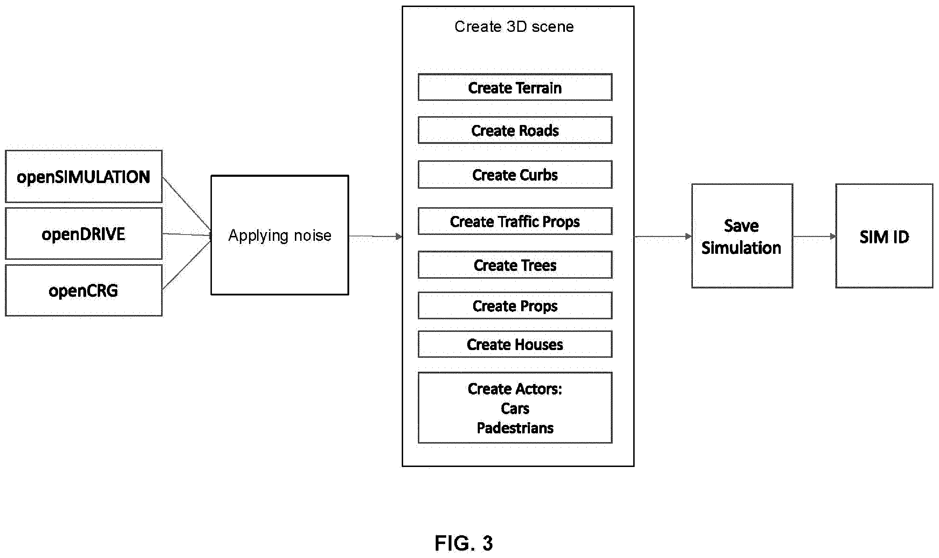

Reference is now made also to FIG. 3, which depicts an exemplary flow of operations for generating a sensory ranging data simulation. The sensory ranging data simulation includes emulation of terrain, roads, curbs, traffic properties, trees, props, houses and/or dynamic objects as outputted by actual sensors when the sensors are active in the geographic area.

Reference is now made again to FIG. 2. As shown at 104, the sensory ranging data simulation is now converted to an enhanced semantic-data dataset emulating the geographical area. The enhanced semantic-data dataset comprises a plurality of enhanced scene objects having object location coordinates adjusted when the noise patterns have been applied and/or a plurality of values of respective semantically described parameters when the noise patterns have been applied. The enhanced semantic-data dataset comprises enhanced scene objects which are optionally similar to the received scene objects and comprises adjusted object location coordinates and/or adapted values of semantically described parameters of the geographical area.

As shown at 105, the enhanced semantic-data dataset is now outputted, for example injected to the host vehicle simulation engine, for instance using native interfaces and/or stored in a memory accessible to the host vehicle simulation engine. Additionally and/or alternatively, the enhanced semantic-data dataset may be injected using one or more virtual drivers using, for example, Application Programming Interface (API) functions of the autonomous driving system, a Software Development Kit (SDK) provided for the autonomous driving system and/or for the training system and/or the like. Optionally, the outputted enhanced semantic-data dataset is stored in at least one data storage 207. Optionally, at least one data storage 207 comprises a database.

Optionally, process 100 may further comprise generating report data and outputting the report data. The report data may comprise one or more of data analytics and data analysis. Data analysis refers to a historical view of a system's operation, for example when executing process 100. Data analytics refers to modeling and predicting future results of a system, for example when executing process 100. Optionally, generating the report data comprises applying big data analysis methods as known in the art.

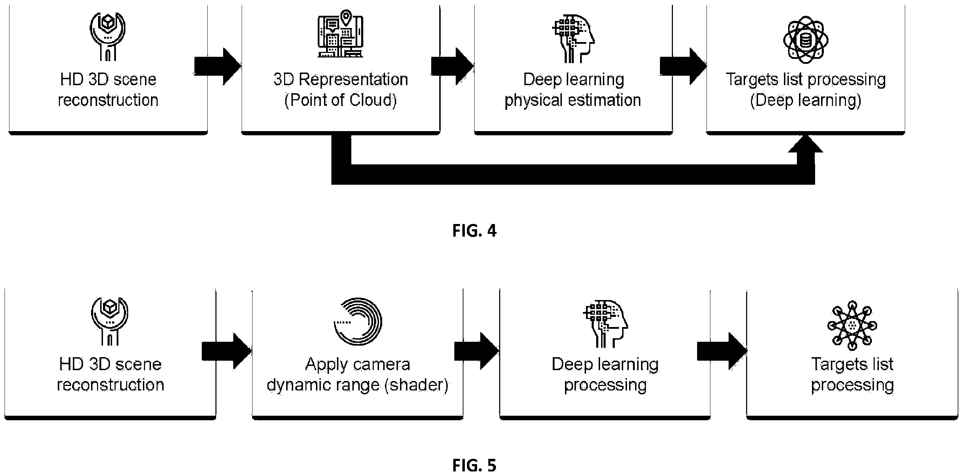

Reference is now made also to FIG. 4 and 5. The enhanced semantic data optionally comprises target list(s) of objects; each includes values of parameters to emulate how the physical world is perceived by sensors of a vehicle hosting a simulated autonomous driving system. FIGs. 4 and 5 depict the creating of such target lists using deep neural network learning techniques, as known in the art.

The enhanced semantic-data dataset may be outputted as a stream of semantic information representing the geographical area to the host vehicle simulation engine.

The enhanced semantic-data dataset may be divided to a number of channels each representing a reading of different vehicle sensors which are emulated as described above.

Reference is now made again to FIG. 1. As indicated above and shown at 106, 101-105 are iteratively repeated, optionally for an identified amount of iterations.

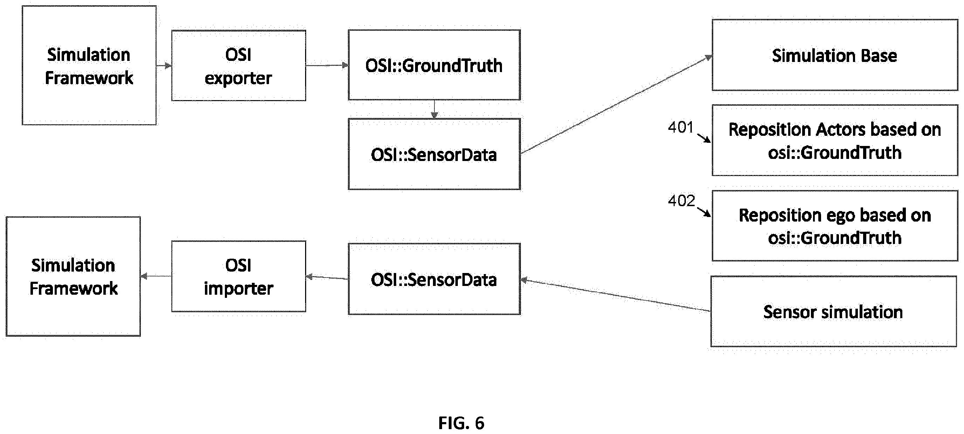

Reference is now made also to FIG. 6, showing an exemplary flow of data. The simulation framework is received from the environment simulation engine via an Open System Interconnection (OSI) exporter and received as ground truth, optionally together with sensor data as input for generating a simulation as described in 102 and 103 above. Optionally, dynamic objects such as actors are added to the simulation as shown at 401 and/or repositioned in the simulation as shown at 401. Optionally, egomotion Estimation of one or more sensors (e.g. velocity and yaw rate (rotational speed around the height axis)) is added to the simulation as shown at 402.

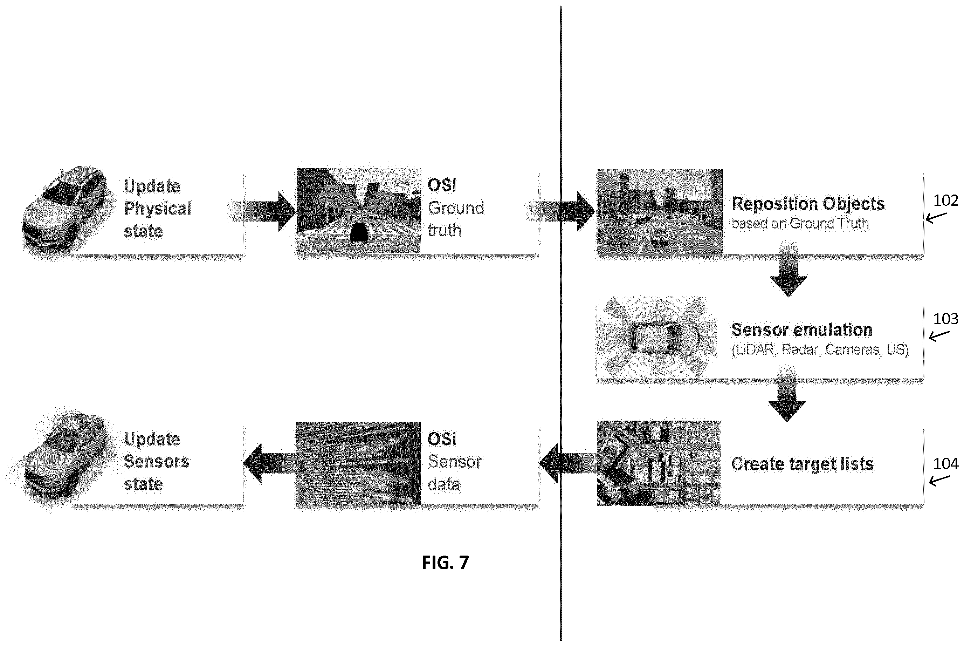

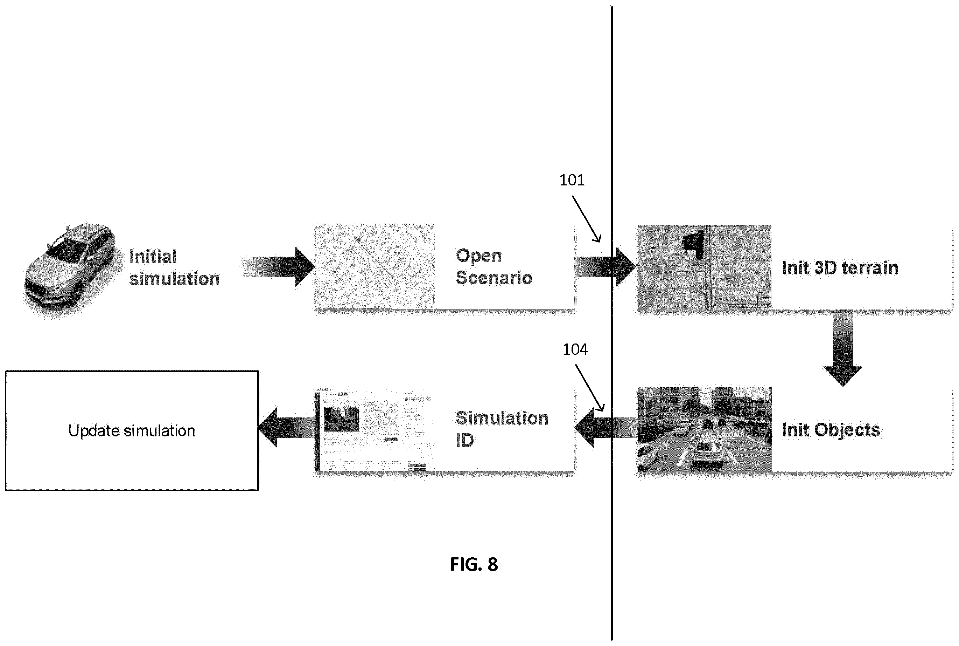

This allows calculating large rotational velocities around axes due to braking or bad roads (tilt and roll motion). The simulation is then converted to be inputted using OSI importer to the simulation framework of the host vehicle simulation engine, for example as described above. Reference is now made also to FIG. 7, graphically depicting how enhanced semantic data that contains target lists that semantically represents parameters of objects of a scene in a geographical area is created by the system (right side of the line) and how this enhanced semantic data is forward to update sensor state and readings. Optionally, the target lists are created as depicted in FIGs. 4 and 5. Reference is now also made to FIG. 8, graphically depicting how the system (right side of the line) updates a simulation executed externally, for example by a host vehicle simulation engine.

It is expected that during the life of a patent maturing from this application many relevant devices, systems, methods and computer programs will be developed and the scope of the terms imaging sensor, range sensor, machine learning algorithm and neural network are intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

The word "exemplary" is used herein to mean "serving as an example, an instance or an illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art.

## Claims

1. A computer implemented method of creating data for a host vehicle simulation for training an autonomous driving system, comprising:
in each of a plurality of iterations of a host vehicle simulation engine (202), using at least one processor (204) for:
obtaining from an environment simulation engine (201) a semantic-data dataset representing a plurality of scene objects in a geographical area, each of said plurality of scene objects comprising at least object location coordinates and a plurality of values of semantically described parameters for each of said plurality of scene objects;
placing said plurality of scene objects in a virtual three dimensional (3D) visual realistic scene created for emulating said plurality of scene objects in said geographical area according to said semantic-data dataset and based on synthetic 3D imaging data generated from a virtual realistic model created using visual imagery data of said geographical area;
creating sensory ranging data simulation for said geographical area by applying to the virtual 3D visual realistic scene at least one noise pattern including at least one noise effect induced by at least one of said plurality of scene objects, said at least one noise pattern is associated with at least one sensor of a vehicle simulated in said virtual 3D visual realistic scene by said host vehicle simulation engine (202);
converting said sensory ranging data simulation to an enhanced semantic-data dataset emulating said geographical area, said enhanced semantic-data dataset comprising a plurality of enhanced scene objects having object location coordinates adjusted when said at least one noise pattern has been applied and a plurality of values of respective said semantically described parameters adapted when said at least one noise pattern has been applied; and
providing said enhanced semantic-data dataset to said host vehicle simulation engine (202) which updates said simulation of said vehicle in said virtual 3D visual realistic scene of said geographical area.

2. The method of claim 1, wherein said virtual 3D visual realistic scene being generated using at least one trained neural network trained using a perceptual loss function,
wherein said neural network receives said semantic-data dataset; and
wherein said neural network generates said virtual 3D visual realistic scene according to said semantic-data dataset.

3. The method of claim 2, wherein said at least one trained neural network is trained using optical flow estimation to reduce temporal inconsistency between consecutive frames of a created virtual 3D visual realistic scene.

4. The method of claim 2, wherein said neural network is a Generative Adversarial Neural Network (GAN) or a Conditional Generative Adversarial Neural Network (cGAN).

5. The method of claim 1, wherein said at least one range sensor of said vehicle simulated by said host vehicle simulation engine (202) is selected from a group of sensors consisting of: a camera, a video camera, an infrared camera, a night vision sensor, a Light Detection and Ranging (LIDAR) sensor, a radar, and an ultra-sonic sensor.

6. The method of claim 1, wherein said at least one noise effect induced by said at least one scene object is affected by at least one object attribute of said at least one scene obj ect.

7. The method of claim 1, wherein providing said enhanced semantic-data dataset to said host vehicle simulation engine (202) comprises sending a stream of data to at least one other processor via at least one digital communication network interface connected to said at least one processor.

8. The method of claim 1, wherein providing said enhanced semantic-data dataset to said host vehicle simulation engine (202) comprises storing a file on a shared access memory accessible by said host vehicle simulation engine (202).

9. The method of claim 1, further comprising using said at least one processor for:
generating report data comprising at least one of analysis report data and analytics report data; and
outputting said report data.

10. A system for creating data for a host vehicle simulation for training an autonomous driving system, comprising:
an input interface (205) for obtaining from an environment simulation engine (201) in each of a plurality of iterations a semantic-data dataset representing a plurality of scene objects in a geographical area, said semantic-data dataset comprising at least object location coordinates and a plurality of values of semantically described parameters for each of said plurality of scene objects;
at least one processor (204) for:
obtaining from an environment simulation engine (201) a semantic-data dataset representing a plurality of scene objects in a geographical area, each of said plurality of scene objects comprising at least object location coordinates and a plurality of values of semantically described parameters for each of said plurality of scene objects;
placing said plurality of scene objects in a virtual three dimensional (3D) visual realistic scene created for emulating said plurality of scene objects in said geographical area according to said semantic-data dataset and based on synthetic 3D imaging data generated from a virtual realistic model created using visual imagery data of said geographical area;
creating sensory ranging data simulation for said geographical area by applying to the virtual 3D visual realistic scene at least one noise pattern including at least one noise effect induced by at least one of said plurality of scene objects, said at least one noise pattern is associated with at least one sensor of a vehicle simulated in said virtual 3D visual realistic scene by said host vehicle simulation engine (202);
converting said sensory ranging data simulation to an enhanced semantic-data dataset emulating said geographical area, said enhanced semantic-data dataset comprising a plurality of enhanced scene objects having object location coordinates adjusted when said at least one noise pattern has been applied and a plurality of values of respective said semantically described parameters adapted when said at least one noise pattern has been applied; and
an output interface (205) for providing said enhanced semantic-data dataset to said host vehicle simulation engine (202) which updates said simulation of said vehicle in said virtual 3D visual realistic scene of said geographical area.

11. The system of claim 10, wherein said output interface is a digital communication network interface.

12. The system of claim 10, further comprising a digital memory for at least one of storing code and storing an enhanced semantic-data dataset.

13. The system of claim 10, further comprising a digital data storage connected to said at least one processor via said output interface.

14. The system of claim 13, wherein said digital data storage is selected from a group consisting of: a storage area network, a network attached storage, a hard disk drive, an optical disk, and a solid state storage.

15. The method of claim 1, wherein creating the virtual realistic model comprising:
applying at least one trained classifier to the visual imagery data to classify and label to a class label at least one scene object identified in said geographical area; and
superimposing over a geographic map data of said geographical area the classified and labeled at least one scene object.

## Patentansprüche

1. Computerimplementiertes Verfahren zum Generieren von Daten für eine Wirtsfahrzeugsimulation zum Trainieren eines autonomen Fahrsystems, umfassend:
die Verwendung von zumindest einem Prozessor (204) bei jeder einer Vielzahl von Iterationen einer Wirtsfahrzeug-Simulationsengine (202) zum:
Beziehen eines Datensatzes von semantischen
Daten, der eine Vielzahl von Szeneobjekten in einem geografischen Bereich darstellt, von einer Umgebungs-Simulationsengine (201), wobei jedes der Vielzahl von Szeneobjekten zumindest Objektstandortkoordinaten und eine Vielzahl von Werten von semantisch beschriebenen Parametern für jedes der Vielzahl von Szeneobjekten umfasst;
Platzieren der Vielzahl von Szeneobjekten in einer visuell realistischen virtuellen dreidimensionalen (3D) Szene, die erstellt wird zum Nachbilden der Vielzahl von Szeneobjekten in dem geografischen Bereich entsprechend dem Datensatz von semantischen Daten und auf der Grundlage von synthetischen 3D-Bildgebungsdaten, die von einem virtuell realistischen Modell, das unter Verwendung von visuellen Bilddaten des geographischen Bereichs erstellt wird, generiert werden;
Erstellen einer sensorischen Ranging-Daten-Simulation für den geografischen Bereich durch Anwenden zumindest eines Geräuschmusters mit zumindest einem Geräuscheffekt, der von zumindest einem der Vielzahl von Szeneobjekten induziert wird, auf die visuell realistische virtuelle 3D-Szene, wobei das zumindest eine Geräuschmuster zumindest einem Sensor eines Fahrzeugs zugeordnet wird, das in der visuell realistischen virtuellen 3D-Szene von der Wirtsfahrzeug-Simulationsengine (202) simuliert wird;
Konvertieren der sensorischen Ranging-Daten-Simulation in einen erweiterten Datensatz von semantischen Daten, der den geografischen Bereich nachbildet, wobei der erweiterte Datensatz von semantischen Daten eine Vielzahl von erweiterten Szeneobjekten umfasst mit Objektstandortkoordinaten, die angepasst werden, wenn das zumindest eine Geräuschmuster angewendet wurde, und mit einer Vielzahl von Werten der jeweiligen semantisch beschriebenen Parameter, die angepasst werden, wenn das zumindest eine Geräuschmuster angewendet wurde; und
Bereitstellen des erweiterten Datensatzes von semantischen Daten an die Wirtsfahrzeug-Simulationsengine (202), die die Simulation des Fahrzeugs in der visuell realistischen virtuellen 3D-Szene des geografischen Bereichs aktualisiert.

2. Verfahren nach Anspruch 1, wobei die visuell realistische virtuelle 3D-Szene mit Hilfe von wenigstens einem trainierten neuronalen Netz generiert wird, das unter Anwendung einer perzeptiven Verlustfunktion trainiert wird, wobei das neuronale Netz den Datensatz von semantischen Daten erhält; und wobei das neuronale Netz die visuell realistische virtuelle 3D-Szene entsprechend dem Datensatz von semantischen Daten generiert.

3. Verfahren nach Anspruch 2, wobei das zumindest eine trainierte neuronale Netz mit Hilfe einer Berechnung des optischen Flusses trainiert wird, um eine zeitliche Inkonsistenz zwischen aufeinanderfolgenden Bildern einer erstellten visuell realistischen virtuellen 3D-Szene zu verringern.

4. Verfahren nach Anspruch 2, wobei das neuronale Netz ein Generative Adversarial Neuronal Network (GAN) oder ein Conditional Generative Adversarial Neuronal Nerwork (cGAN) ist.

5. Verfahren nach Anspruch 1, wobei der zumindest eine Bereichssensor des von der Wirtsfahrzeug-Simulationsengine (202) simulierten Fahrzeugs ausgewählt wird aus einer Gruppe bestehend aus: einer Kamera, einer Videokamera, einer Infrarotkamera, einem Nachtsichtsensor, einem Light-Detection-and-Ranging(LIDAR)-Sensor, einem Radar und einem Ultraschallsensor.

6. Verfahren nach Anspruch 1, wobei der wenigstens eine Geräuscheffekt, der von dem wenigstens einen Szeneobjekt induziert wird, von wenigstens einem Objektattribut des wenigstens einen Szeneobjekts beeinflusst wird.

7. Verfahren nach Anspruch 1, wobei die Bereitstellung des erweiterten Datensatzes von semantischen Daten an die Wirtsfahrzeug-Simulationsengine (202) das Senden eines Datenstroms über zumindest eine mit zumindest einem weiteren Prozessor verbundene digitale Kommunikationsnetzwerk-Schnittstelle an diesen zumindest einen Prozessor umfasst.

8. Verfahren nach Anspruch 1, wobei die Bereitstellung des erweiterten Datensatzes von semantischen Daten an die Wirtsfahrzeug-Simulationsengine das Speichern einer Datei in einem Speicher mit gemeinsamem Zugriff, auf welchen die Wirtsfahrzeug-Simulationsengine (202) zugreifen kann, umfasst.

9. Verfahren nach Anspruch 1, ferner umfassend die Verwendung von zumindest einem Prozessor zum:
Generieren von Berichtsdaten, die zumindest Analyse-Berichtsdaten oder zumindest Analytik-Berichtsdaten umfassen; und
Ausgeben der Berichtsdaten.

10. System zum Erstellen einer Wirtsfahrzeugsimulation zum Trainieren eines autonomen Fahrsystems, umfassend:
eine Eingabeschnittstelle (205) zum Beziehen eines Datensatzes von semantischen Daten, der eine Vielzahl von Szeneobjekten in einem geografischen Bereich darstellt, von einer Umgebungs-Simulationsengine (201) bei jeder einer Vielzahl von Iterationen, wobei der Datensatz von semantischen Daten zumindest Objektstandortkoordinaten und eine Vielzahl von semantisch beschriebenen Parametern für jedes der Vielzahl von Szeneobjekten umfasst;
mindestens einen Prozessor (204) zum:
Beziehen eines Datensatzes von semantischen Daten, der eine Vielzahl von Szeneobjekten in einem geografischen Bereich darstellt, von einer Umgebungs-Simulationsengine (201), wobei jedes der Vielzahl von Szeneobjekten zumindest Objektstandortkoordinaten und eine Vielzahl von Werten von semantisch beschriebenen Parametern für jedes der Vielzahl von Szeneobjekten umfasst;
Platzieren der Vielzahl von Szeneobjekten in einer visuell realistischen virtuellen dreidimensionalen (3D) Szene, die erstellt wird zum Nachbilden der Vielzahl von Szeneobjekten in dem geografischen Bereich entsprechend dem Datensatz von semantischen Daten und auf der Grundlage von synthetischen 3D-Bildgebungsdaten, die von einem virtuell realistischen Modell, das unter Verwendung von visuellen Bilddaten des geographischen Bereichs erstellt wird, generiert werden;
Erstellen einer sensorischen Ranging-Daten-Simulation für den geografischen Bereich durch Anwenden zumindest eines Geräuschmusters mit zumindest einem Geräuscheffekt, der von zumindest einem der Vielzahl von Szeneobjekten induziert wird, auf die visuell realistische virtuelle 3D-Szene, wobei das zumindest eine Geräuschmuster zumindest einem Sensor eines Fahrzeugs zugeordnet wird, das in der visuell realistischen virtuellen 3D-Szene von der Wirtsfahrzeug-Simulationsengine (202) simuliert wird;
Konvertieren der sensorischen Ranging-Daten-Simulation in einen erweiterten Datensatz von semantischen Daten, der den geografischen Bereich nachbildet, wobei der erweiterte Datensatz von semantischen Daten eine Vielzahl von erweiterten Szeneobjekten umfasst mit Objektstandortkoordinaten, die angepasst werden, wenn das zumindest eine Geräuschmuster angewendet wurde, und mit einer Vielzahl von Werten der jeweiligen semantisch beschriebenen Parameter, die angepasst werden, wenn das zumindest eine Geräuschmuster angewendet wurde; und Bereitstellen des erweiterten Datensatzes von semantischen Daten an die Wirtsfahrzeug-Simulationsengine (202), die die Simulation des Fahrzeugs in der visuell realistischen virtuellen 3D-Szene des geografischen Bereichs aktualisiert.

11. System nach Anspruch 10, wobei die Ausgabeschnittstelle eine digitale Kommunikationsnetzwerk-Schnittstelle ist.

12. System nach Anspruch 10, ferner umfassend einen digitalen Speicher zumindest zur Speicherung von Code und/oder zur Speicherung eines erweiterten Datensatzes von semantischen Daten.

13. System nach Anspruch 10, ferner umfassend einen digitalen Speicher, der über die Ausgabeschnittstelle mit dem zumindest einen Prozessor verbunden ist.

14. System nach Anspruch 13, wobei der digitale Datenspeicher ausgewählt ist aus einer Gruppe bestehend aus: einem Speicherbereichsnetz, einem Netzwerkspeicher, einem Festplattenlaufwerk, einer optischen Platte und einem Festkörperspeicher.

15. Verfahren nach Anspruch 1, wobei das Erstellen des virtuell realistischen Modells umfasst:
Anwenden von mindestens einem trainierten Klassifikator auf die visuellen Bilddaten, um mindestens ein in dem geographischen Gebiet identifiziertes Szeneobjekt zu klassifizieren und mit einem Klassenlabel zu versehen; und Überlagern geografischer Kartendaten des geografischen Bereichs mit dem klassifizierten und mit Label versehenen zumindest einen Szeneobjekt.

## Revendications

1. Procédé appliqué par ordinateur pour créer des données de simulation d'un véhicule hôte, pour entraîner un système de conduite autonome comprenant dans chacune des itérations d'un ensemble d'itérations d'un moteur de simulation de véhicule hôte (202) en utilisant au moins un processeur (204) pour :
* obtenir d'un moteur de simulation d'environnement (201), un ensemble de données sémantiques représentant un ensemble d'objets scéniques d'une zone géographique, chacun des objets de l'ensemble des objets scéniques comprenant au moins des coordonnées de positionnement d'objets et un ensemble de valeurs de paramètres décrits sémantiquement pour chacun des objets de l'ensemble d'objets scéniques,
* placer cet ensemble d'objets scéniques dans une scène de réalité visuelle, virtuelle à trois dimensions (3D), créée pour émuler cet ensemble d'objets scéniques dans la zone géographique selon l'ensemble de données sémantiques et fondé sur des données d'imagerie 3D de synthèse générées d'un modèle de réalité virtuelle créée en utilisant des données d'imagerie visuelle de la zone géographique,
* créer une simulation de données de télémétrie sensorielle de la zone géographique en appliquant à la scène de réalité virtuelle, visuelle 3D, au moins un modèle de bruit comprenant au moins un effet de bruit induit par au moins l'un des objets de l'ensemble des objets scéniques, ce modèle de bruit étant associé à au moins un capteur d'un véhicule simulé dans la scène de réalité virtuelle visuelle 3D par le moteur de simulation du véhicule hôte (202),
* convertir la simulation de données de télémétrie sensorielle à un ensemble de données sémantiques améliorées émulant cette zone géographique, cet ensemble de données sémantiques améliorées comprenant un ensemble d'objets scéniques améliorés ayant des coordonnées de position d'objet réglées lorsque le modèle de bruit est appliqué et qu'un ensemble de valeurs de paramètres respectifs à description sémantique est adapté lorsque ce modèle de bruit est appliqué, et
* fournir cet ensemble de données sémantiques amélioré au moteur de simulation de véhicule hôte (202) qui met à jour la simulation du véhicule dans cette scène de réalité virtuelle, visuelle 3D de la zone géographique.

2. Procédé selon la revendication 1,
dans lequel
la scène de réalité virtuelle visuelle 3D est générée en utilisant au moins un réseau neuronal entraîné en utilisant une fonction de perte de perception,
* le réseau neuronal reçoit l'ensemble de données sémantiques, et
* le réseau neuronal génère la scène de réalité virtuelle, visuelle 3D selon l'ensemble de données sémantiques.

3. Procédé selon la revendication 2,
dans lequel
au moins ce réseau neuronal entraîné est entraîné en utilisant une estimation de flux optique pour réduire l'incohérence temporelle entre les trames successives de la scène de réalité virtuelle, visuelle 3D, créée.

4. Procédé selon la revendication 2,
dans lequel
le réseau neuronal est un réseau antagoniste génératif (GAN) ou un réseau antagoniste génératif opposé (cGAN).

5. Procédé selon la revendication 1,
dans lequel
au moins un capteur de plage du véhicule simulé par le moteur de simulation de véhicule hôte (202) est choisi dans un groupe de capteurs comprenant : une caméra, une caméra vidéo, une caméra infrarouge, un capteur de vision nocturne, (LIDAR), radar, capteur à ultrason.

6. Procédé selon la revendication 1,
dans lequel
au moins un effet de bruit induit par au moins un objet scénique est affecté par au moins un attribut d'objets de cet objet scénique.

7. Procédé selon la revendication 1, consistant à :
fournir un ensemble de données sémantiques améliorées au moteur de simulation de véhicule hôte (202) comprenant l'émission d'un flux de données vers au moins un autre processeur par au moins une interface de réseau de communication numérique reliée à ce processeur.

8. Procédé selon la revendication 1,
consistant à :
fournir cet ensemble de données numériques améliorées au moteur de simulation de véhicule hôte (202) consistant à enregistrer un dossier sur une mémoire d'accès partagé accessible par le moteur de simulation de véhicule hôte (202).

9. Procédé selon la revendication 1,
consistant en outre à :
utiliser au moins un processeur pour :
- générer une donnée de rapport comprenant au moins l'une des données parmi les données de rapport d'analyse et des données de rapport analytique, et
- fournir en sortie les données de rapport.

10. Système pour créer des données pour une simulation de véhicule hôte pour entraîner un système de conduite autonome comprenant :
- une interface d'entrée (205) pour obtenir d'un moteur de simulation d'environnement (201) dans chaque itération d'un ensemble d'itérations d'ensemble de données sémantiques représentant un ensemble d'objets scéniques dans une zone géographique, cet ensemble de données sémantiques comprenant au moins les coordonnées de position d'un objet et un ensemble de valeurs de paramètres décrits sémantiquement pour chaque objet de l'ensemble des objets scéniques,
- au moins un processeur (204) pour,
* obtenir d'un moteur de simulation d'environnement (201), un ensemble de données sémantiques représentant un ensemble d'objets scéniques d'une zone géographique, chacun des objets de l'ensemble des objets scéniques comprenant au moins des coordonnées de positionnement d'objets et un ensemble de valeurs de paramètres décrits sémantiquement pour chacun des objets de l'ensemble d'objets scéniques,
* placer cet ensemble d'objets scéniques dans une scène de réalité visuelle, virtuelle à trois dimensions (3D), créée pour émuler cet ensemble d'objets scéniques dans la zone géographique selon l'ensemble de données sémantiques et fondé sur des données d'imagerie 3D de synthèse générées d'un modèle de réalité virtuelle créé en utilisant des données d'imagerie visuelle de la zone géographique,
* créer une simulation de données de télémétrie sensorielle de la zone géographique en appliquant à la scène de réalité virtuelle, visuelle 3D, au moins un modèle de bruit comprenant au moins un effet de bruit induit par au moins l'un des objets de l'ensemble des objets scéniques, ce modèle de bruit étant associé à au moins un capteur d'un véhicule simulé dans la scène de réalité virtuelle visuelle 3D par le moteur de simulation du véhicule hôte (202),
* convertir la simulation de données de télémétrie sensorielle à un ensemble de données sémantiques améliorées émulant cette zone géographique, cet ensemble de données sémantiques améliorées comprenant un ensemble d'objets scéniques améliorés ayant des coordonnées de position d'objet réglées lorsque le modèle de bruit est appliqué et qu'un ensemble de valeurs de paramètres respectifs à description sémantique est adapté lorsque ce modèle de bruit est appliqué, et
* fournir une interface de sortie (205) cet ensemble de données sémantiques amélioré au moteur de simulation de véhicule hôte (202) qui met à jour la simulation du véhicule dans cette scène de réalité virtuelle, visuelle 3D de la zone géographique.

11. Système selon la revendication 10,
dans lequel
l'interface de sortie est une interface de réseau de communication numérique.

12. Système selon la revendication 10, comprenant en outre :
une mémoire numérique pour au moins un code d'enregistrement et enregistrer l'ensemble de données sémantiques améliorées.

13. Système selon la revendication 10,
comprenant en outre :
un enregistrement de données numériques relié à au moins un processeur par l'interface de sortie.

14. Système selon la revendication 13,
dans lequel
l'enregistrement de données numériques est choisi dans le groupe comprenant : un réseau de zones d'enregistrement, un enregistrement attaché à un réseau, un entraînement à disque dur, un disque optique, et un enregistrement état solide.

15. Procédé selon la revendication 1,
dans lequel
créer le modèle de réalité virtuelle consiste à :
- appliquer à au moins un classeur entraîné aux données d'imagerie visuelle de classifier et d'étiqueter à une étiquette de classe au moins un objet scénique identifié dans la zone géographique, et
- superposer sur une carte géographique, les données de la zone géographique les objets scéniques classifiés et étiquetés d'au moins un objet scénique.
